# FASCICULE DE BREVET EUROPEEN

(11) **EP 1 786 734 B1**
(45) Date de publication et mention de la délivrance du brevet: **16.12.2009**
(21) Numéro de dépôt: 05791136.4
(22) Date de dépôt: 18.07.2005
(51) Int. Cl.: C02F 1/56, C02F 1/76, C02F 1/50, C02F 1/52, C02F 1/00, C02F 9/04

(54) **PRODUIT SOLIDE COMPACTÉ BICOUCHE DE PURIFICATION D'EAU ET PROCÉDÉ DE FABRICATION**
DOPPELSCHICHTIGES, VERDICHTETES, FESTES WASSERREINIGUNGSPRODUKT UND SEINE HERSTELLUNG
DOUBLE-LAYERED COMPACTED SOLID WATER-PURIFICATION PRODUCT AND PROCESS FOR MAKING IT

(30) Priorité: 19.07.2004 FR 0407968
(43) Date de publication de la demande: 23.05.2007
(73) Titulaire: Eurotab, 42170 Saint Just Saint Rambert (FR)
(72) Inventeur: BRANLARD, Paul, F-69005 Lyon (FR); DESMARESCAUX, Philippe, F-69002 Lyon (FR); MONERON, Murielle, 42170 Saint Just Saint Rambert (FR)
(74) Mandataire: Brédeville, Odile Marie
(86) Numéro de dépôt international: PCT/FR2005/001834
(87) Numéro de publication internationale: WO 2006/016073

(56) Documents cités:
- EP-A- 0 066 421
- EP-A- 0 851 024
- WO-A-02/00557
- US-A- 5 023 012
- US-A- 5 681 475
- US-A1- 2004 026 657
- US-B1- 6 194 368
- US-B1- 6 372 255

## Description

La présente invention concerne un produit solide compacté de purification d'eau sous la forme d'au moins deux couches.

Le traitement de l'eau en vue de la purifier et/ou de la rendre potable fait l'objet de nombreuses recherches et est un sujet primordial pour l'humanité.

Parallèlement au développement de stations d'épuration et d'installations à grande échelle pour le traitement de l'eau des grandes agglomérations, en particulier dans les pays industrialisés, on cherche également à développer des moyens simples de traitement efficace et rapide d'un volume d'eau prédéterminé dans le but par exemple de rendre potable de l'eau issue d'un point d'eau naturel, comme un puits ou une mare, dans des endroits du monde ne pouvant bénéficier, pour des raisons d'accès difficile ou pour des raisons économiques, d'installations industrielles de traitement de l'eau. De tels moyens pourraient également être utilisés pour purifier des eaux, qui bien que non destinées à une consommation quotidienne, doivent pouvoir être bues sans danger pour la santé de la personne en ayant malencontreusement ingéré.

La purification d'une eau quelconque, en particulier en vue de la rendre potable, sous-entend plusieurs traitements et notamment une étape de clarification, destinée à séparer les matières organiques susceptibles d'être en suspension dans l'eau, et une étape de désinfection, destinée à tuer les bactéries présentes dans l'eau. La clarification se fait généralement par floculation et/ou coagulation puis sédimentation et filtration des substances organiques. La désinfection se fait généralement par libération de chlore actif bactéricide.

Par ailleurs, pour des raisons pratiques de manipulation et de stockage, et compte tenu de l'utilisation souhaitée, on cherche à disposer d'un moyen de purification d'eau sous la forme d'une composition solide, comme par exemple une pastille ou une tablette, de préférence prédosée, que l'on pourra simplement jeter dans le volume prédéterminé d'eau à purifier, sans qu'il soit nécessaire de mettre en oeuvre des moyens plus complexes qu'une simple agitation ponctuelle.

Des compositions solides pour clarifier et désinfecter de l'eau sont déjà connues.

Le document WO96/32194 décrit des compositions sous forme de tablettes pour purifier un volume prédéterminé d'eau, comprenant entre autres un agent floculant un désinfectant libérant du chlore actif et un agent effervescent. Toutefois, dans ce document, ces trois composés sont libérés simultanément et au même endroit dans le volume d'eau à purifier. On constate que le chlore actif est rapidement consommé et qu'une grande quantité de désinfectant est nécessaire pour purifier l'eau.

Le document FR 2 243 156 décrit une structure à composants contigus et séparés, en particulier sous la forme de comprimés à deux couches, chaque couche comprenant un désinfectant différent, l'un à dissolution rapide, l'autre à dissolution lente. Dans ce document, le but est de traiter l'eau d'une piscine en provoquant, dans un premier temps, une surchloration par la libération du chlore actif du désinfectant à dissolution rapide, et dans un deuxième temps une libération lente du chlore disponible du désinfectant à dissolution lente pour maintenir le niveau nécessaire de chlore pendant de longues périodes dans la piscine. La structure ainsi décrite dans FR 2 243 156 est également grande consommatrice de désinfectants.

Or, une eau comprenant de forts dosages en désinfectants a des propriétés organoleptiques très détériorées. Ceci pose particulièrement un problème lorsque le but du traitement est de rendre l'eau potable pour une consommation quotidienne. L'eau n'a pas bon goût et n'est pas agréable à boire.

Le document WO 02/00557 décrit une composition de purification de l'eau pouvant comprendre un floculant, un agent désintégrant et un désinfectant.

Le document US 6, 372, 255 décrit des formes galéniques solides pour des tablettes à libération contrôlée de médicament.

Le document US 6,194, 368 décrit des tablettes détergentes bicouche pour lave-vaisselle comprenant un agent blanchissant, un activateur de blanchiment et un inhibiteur de corrosion.

Le document US 2004/0040915 décrit des compositions de traitement de l'eau solides comprenant au moins une source d'halogène et au moins une source de compensation du Ph

Par ailleurs, pour des raisons tant écologiques qu'économiques, il serait intéressant de disposer d'un moyen de purification de l'eau qui consomme peu de désinfectant tout en étant aussi efficace que les moyens de purification déjà connus.

Ainsi, il existe le besoin d'une composition simple à manipuler, à stocker et à utiliser, qui permettrait à la fois de clarifier, par floculation, et de désinfecter, par action bactéricide, un volume prédéterminé d'une eau quelconque, en particulier pour la rendre potable, sans qu'il soit nécessaire de consommer de grandes quantités de désinfectant

La présente invention vise à remédier à ce problème en proposant une composition solide unique, en particulier sous la forme d'une pastille ou d'une tablette, capable de clarifier et de désinfecter efficacement une eau quelconque sans surconsommation de désinfectant.

Un premier objet de l'invention est un produit solide compacté de purification d'eau comprenant au moins une première couche et au moins une deuxième couche, caractérisé en ce que :
- la première couche comprend au moins un système floculant et au moins un système désintégrant,
- la deuxième couche comprend au moins un désinfectant libérant du chlore actif au contact de l'eau, et au moins un excipient du désinfectant, ledit excipient libérant le désinfectant dans l'eau à un taux contrôlé tel que l'association excipient-désinfectant libère de 0,1 à 100 mg/l de chlore actif par heure.

Le produit selon l'invention permet de clarifier et de désinfecter efficacement toute eau, quelle que soit sa provenance et son état. Ainsi, l'eau d'une mare, d'un puits, peut être purifiée avec le produit selon l'invention.

Grâce à l'agencement spécifique et aux compositions particulières respectives de ses deux couches, le produit selon l'invention permet de libérer dans un premier temps, l'agent floculant, qui précipite les substances organiques en suspension, puis, dans un deuxième temps, alors que les flocs formés par la précipitation des substances organiques et de l'agent floculant ont décanté, l'agent désinfectant pour une action biocide ciblée sur les bactéries présentes dans l'eau.

Le produit selon l'invention est écologique et économique: il ne consomme pas plus de désinfectant que nécessaire. Du fait de sa forme solide, il est simple et pratique à utiliser, à stocker et à manipuler.

Grâce au produit selon l'invention, une filtration de l'eau n'est pas nécessaire.

Grâce au produit selon l'invention, la libération de chlore actif est contrôlée, quelle que soit la vitesse de dissolution intrinsèque du désinfectant dans l'eau. Ainsi, tout désinfectant peut être utilisé et il en résulte une simplicité de fabrication du produit.

Le produit selon l'invention est un produit solide compacté comprenant au moins deux couches.

La première couche du produit selon l'invention comprend au moins un système floculant et au moins un système désintégrant.

Par « système floculant », on entend, selon la présente demande, un système dont le ou les composés vont réagir avec les substances organiques en suspension présentes dans l'eau à purifier en provoquant leur précipitation sous la forme de flocs, c'est-à-dire de solides de densité supérieure à 1, qui vont, après décantation, se déposer et sédimenter au fond du volume d'eau à purifier. Le système floculant permet ainsi de clarifier l'eau à traiter.

De préférence, le système floculant comprend au moins un sel de métal trivalent et au moins un polymère cationique hydrosoluble. En effet, la combinaison d'un sel de métal trivalent, qui est un coagulant, et d'un polymère cationique, qui est un floculant, permet une bonne floculation et une meilleure agrégation des flocs formés par précipitation.

De préférence, le sel de métal trivalent est choisi parmi le sulfate de fer, le sulfate d'aluminium, le polyhydroxychlorure d'aluminium et leurs mélanges. De préférence encore, le sel de métal trivalent est le polyhydroxychlorure d'aluminium.

Ces composés sont bien connus et disponibles commercialement. Un composé particulièrement préféré pour le sel de métal trivalent de la présente invention est le polyhydroxychlorure d'aluminium vendu sous forme de poudre sous la dénomination commerciale « PAC^{®} 32 » par la société SNF.

De préférence, le sel de métal trivalent est présent dans le volume d'eau à traiter à une teneur allant de 10 à 30 ppm exprimé en Al₂0₃.

De préférence, le polymère cationique hydrosoluble est un polymère cationique hydrosoluble de diallyldiméthylammonium chlorure, de préférence de très haut poids moléculaire, par exemple de poids moléculaire supérieur ou égal à 500 000 D. Un composé convenant particulièrement pour la présente invention est le polymère de diallyldiméthylammonium chlorure vendu sous forme de poudre sous la dénomination commerciale « POLYDADMAC^{®} DB45 SH » par la société SNF.

De préférence, le polymère cationique est présent dans le volume d'eau à traiter à une teneur allant de 1 à 2 ppm.

Par « système désintégrant », on entend, selon la présente invention, un système dont le ou les composés vont réagir immédiatement au contact de l'eau pour conduire à la désintégration rapide, de préférence en moins d'une minute, de préférence encore en moins de 30 secondes, de la première couche.

De préférence, le système désintégrant comprend au moins un agent désintégrant choisi parmi la cellulose et ses dérivés, les associations effervescentes d'un polyacide organique hydrosoluble et d'une base faible, et leurs mélanges.

Dans une forme de réalisation de l'invention, l'agent désintégrant est une cellulose, par exemple amorphe ou cristalline. Un exemple de cellulose amorphe convenant à la présente invention est le produit vendu sous la dénomination commerciale « ARBOCEL^{®} A300 » par la société J.Rettenmaier & Söhne. Un exemple de cellulose cristalline convenant à la présente invention est le produit vendu sous la dénomination commerciale « VIVAPUR^{®} 12 » par la société J.Rettenmaier & Söhne.

Dans une autre forme de réalisation de l'invention, l'agent désintégrant est une association effervescente d'un polyacide organique hydrosoluble et d'une base faible. Dans ce cas, le polyacide organique hydrosoluble est choisi de préférence parmi l'acide citrique, l'acide malique, l'acide tartrique, l'acide malonique, l'acide fumarique, l'acide maléique, l'acide succinique et leurs mélanges. De préférence, la base faible est le bicarbonate de sodium.

De préférence, l'agent désintégrant est présent dans la première couche à une teneur inférieure ou égale à 50% en poids, de préférence à une teneur allant de 20% à 40%, en poids, par rapport au poids de la première couche.

En effet, il a été constaté qu'au-delà d'une concentration de 50% en poids d'agent désintégrant dans la première couche, la décantation des flocs formés est fortement ralentie, retardant la clarification de l'eau à traiter.

La combinaison d'un système floculant et d'un système désintégrant tels que définis ci-dessus dans la première couche du produit selon l'invention permet de diffuser rapidement dans l'eau à traiter les coagulants et les floculants, et ce du fait de la désintégration immédiate, de préférence en moins d'une minute, et de préférence encore en moins de trente secondes, de cette première couche au contact de l'eau. Ainsi, la clarification de l'eau peut avoir lieu sans délai. La sédimentation des matières précipitées s'effectue en quelques minutes et conduit à l'obtention d'une eau présentant une très faible turbidité.

La deuxième couche du produit selon l'invention comprend au moins un désinfectant libérant du chlore actif au contact de l'eau, et au moins un excipient du désinfectant, ledit excipient libérant le désinfectant dans l'eau à un taux contrôlé tel que l'association excipient-désinfectant libère de 0,1 à 100 mg/l de chlore actif par heure.

Le désinfectant libérant du chlore actif peut être tout dérivé de chlore connu pour libérer du chlore actif, quelle que soit la vitesse intrinsèque de dissolution de ce dérivé dans l'eau. De préférence, le désinfectant est choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges. De préférence encore, le désinfectant est le sel de sodium de 1,3-dichloro-s-triazine-2,4,6 trione sous forme dihydratée.

Ces composés sont bien connus et sont disponibles commercialement auprès de la société OXYCHEM.

Par « excipient », on entend, au sens de la présente demande, un ou plusieurs composés distincts du désinfectant et servant de véhicule à ce désinfectant, qui sont de plus inertes chimiquement vis-à-vis du désinfectant, c'est-à-dire qui ne réagissent pas avec lui, tant lorsque le produit de l'invention est sous forme stockée que lors de son utilisation dans l'eau à purifier.

L'excipient de la deuxième couche du produit selon l'invention libère le désinfectant dans l'eau à un taux contrôlé tel que l'association excipient-désinfectant libère de 0,1 à 100 mg/l de chlore actif par heure, de préférence à un taux allant de 0,2 à 10 mg/l de chlore actif par heure. Ainsi, la diffusion du désinfectant dans l'eau à traiter est progressive et contrôlée et n'interfère pas avec l'étape de clarification.

Dans une forme de réalisation de l'invention, l'excipient est choisi parmi les composés hydrosolubles à dissolution lente. Ainsi, de préférence, l'excipient est choisi parmi la gomme arabique ou acacia, la gomme adragante, la gomme de caroubier, la gomme xanthane, la gomme guar, et leurs mélanges.

Ainsi, lors de la dissolution progressive de l'excipient dans l'eau, le désinfectant est peu à peu libéré et diffuse dans l'eau à traiter.

Dans une autre forme de réalisation, l'excipient est choisi parmi les composés insolubles hydrophiles gonflant dans l'eau. Ainsi, de préférence, l'excipient est choisi parmi les amidons modifiés, les amidons gélatinisés, la fécule de pomme de terre, et leurs mélanges. Un exemple d'amidon gélatinisé convenant particulièrement à la présente invention est le produit vendu sous la dénomination commerciale « LYCATACB^{®} PGS » par la société Roquette.

Dans le cas où l'excipient est un tel composé insoluble hydrophile gonflant dans l'eau, la libération progressive du désinfectant dans l'eau à traiter se fait par la diffusion de l'eau au sein de l'excipient insoluble.

Ainsi, grâce à la présence de l'excipient particulier qui contrôle la libération du désinfectant dans la deuxième couche, et du fait que cette deuxième couche est distincte de la première couche, le désinfectant n'est pas entraîné avec les agents coagulants et floculants de la première couche qui diffusent très rapidement dans l'eau grâce au système désintégrant. Le désinfectant n'est donc pas prématurément consommé par les substances en suspension avant que ces dernières ne soient précipitées et sédimentent au fond du volume d'eau à traiter.

La deuxième couche du produit selon l'invention garde son intégrité pendant la première phase du traitement, c'est-à-dire pendant la clarification, qui dure moins généralement d'une minute, voire moins de trente secondes. La deuxième couche peut ensuite assurer sa fonction de désinfection par libération progressive et continue, en quelques heures, du désinfectant qui va pouvoir agir sur les micro-organismes pathogènes susceptibles d'être présents dans l'eau à traiter, sans interférer avec les flocs formés lors de la première phase, concentrés au fond du volume à traiter.

Dans une forme préférée de réalisation de l'invention, la densité de la deuxième couche est strictement inférieure à 1, et de préférence va de 0,70 à 0,95. Ainsi, en fin de première phase, lorsque la première couche est totalement désagrégée, la deuxième couche remonte et flotte. Elle est alors totalement éloignée des flocs formés lors de la première phase et la diffusion progressive et continue du désinfectant peut se faire dans les meilleures conditions et sans consommation excessive et inutile d'agent désinfectant.

Le produit selon l'invention peut comprendre des composés additionnels comme des colorants, des parfums, etc...

De préférence, tous les composés constituant le produit selon l'invention sont de qualité alimentaire, c'est-à-dire peuvent être ingérés par l'homme sans danger pour sa santé.

Le produit selon l'invention peut avoir toute forme géométrique possible. Dans une forme de réalisation de l'invention, le produit est sous la forme d'une pastille ou d'une tablette et les deux couches sont adjacentes.

Dans une autre forme de réalisation de l'invention, est sous la forme d'un comprimé ou d'un galet, la première couche enrobant la deuxième couche qui forme un noyau.

Un autre objet de l'invention est un procédé de préparation d'un produit solide compacté de purification d'eau comprenant au moins une première couche et au moins une deuxième couche, caractérisé en ce qu'il comprend les étapes suivantes :
- a°) on prépare un premier mélange d'au moins un système floculant et d'au moins un système désintégrant, sous forme de poudre,
- b°) on prépare un deuxième mélange d'au moins un désinfectant libérant du chlore actif au contact de l'eau, et d'au moins un excipient du désinfectant, ledit excipient libérant le désinfectant dans l'eau à un taux contrôlé tel que l'association excipient-désinfectant libère de 0,1 à 100 mg/l de chlore actif par heure, sous forme de poudre,
- c°)on précompacte le mélange obtenu en b°) dans une pastilleuse,
- d°) on rajoute dans la pastilleuse le mélange obtenu en a°) et on compacte le tout pour obtenir un produit bicouche.

Le produit selon l'invention est de préférence préparé par compression directe à l'aide d'une pastilleuse. Ce procédé est connu.

Dans une autre forme de réalisation, le produit selon l'invention peut comprendre, outre la première et la deuxième couche, une ou plusieurs couches additionnelles, comme par exemple une couche intermédiaire séparant la première et la deuxième couche ou encore une couche externe.

Le degré de compaction de la première couche et celui de la deuxième couche sont ajustés selon les taux de dissolution respectifs désirés pour chacune de ces couches au sein de l'eau à traiter.

La présente invention va maintenant être illustrée à l'aide des exemples suivants.

### EXEMPLES:

Ci-après est donnée la signification des termes utilisés dans les exemples qui suivent :
- PAC^{®} 32 : poly hydroxychlorure d'aluminium sous forme de poudre, vendu par la société SNF.
- PolyDADMAC^{®} DB45SH : polymère cationique hydrosoluble de diallyldimethylammonium chlorure sous forme de poudre, vendu par la société SNF.
- DCCNa, 2H₂O : sel de sodium de 1,3-dichloro-s-triazine-2,4,6 trione sous forme de dihydrate, encore appelé dichloroisocyanurate de sodium sous forme de dihydrate, sous forme de poudre
- LYCATAB^{®} PGS : amidon gélatinisé, sous forme de poudre, vendu par la société Roquette.
- ARBOCEL® A300 : cellulose amorphe vendue par la société J.Rettenmaier & Söhne

### EXEMPLE 1 (selon l'invention) :

Cet exemple illustre l'invention dans le cas où l'excipient de la deuxième couche est un composé hydrosoluble à dissolution lente.

On dispose de 10 litres d'eau turbide (environ 400 FTU) préparée à partir d'eau initialement potable, à laquelle on a ajouté 0,015 g/l d'acide humique et 0,5 g/l de kaolin. Le pH est voisin de 8.

En vue de traiter ce volume de 10 litres d'eau turbide, on prépare une pastille bicouche de 2,000 g, la première couche assurant la clarification étant appelée la couche A et pesant 1,000 g, la deuxième couche assurant la désinfection de l'eau à traiter étant appelée la couche B et pesant 1,000 g. Le diamètre et l'épaisseur de la pastille sont respectivement de 20 mm et de 3,6 mm. La pastille est préparée par compression directe. La composition des couches et le taux de chaque ingrédient résultant dans le volume d'eau à traiter sont donnés ci-après:

| **Composition couche A** | mg dans la couche A | mg/l eau à traiter |
|---|---|---|
| Bicarbonate de sodium | 255,5 | 25,5 |
| Acide citrique | 109,5 | 10,9 |
| PAC^{®} 32 | 625,0 | 20* |
| PolyDADMAC^{®} DB45SH | 20,0 | 2 |

| | | |
|---|---|---|
| *exprimé en Al₂O₃ | | |

| **Composition couche B** | mg dans la couche B | mg/l eau à traiter |
|---|---|---|
| Gomme acacia | 962,2 | 96,2 |
| DCCNa, 2H₂O | 37,8 | 3,8 |

La densité de la couche B est 0,87 pour une pression de compaction de 75 MPa appliquée sur la pastille. Sa porosité est de 45%.

La pastille bicouche est introduite dans l'eau, sous agitation mécanique pendant deux minutes. La pastille tombe au fond du récipient et la couche A de la pastille se désagrège par effervescence en vingt secondes environ.

On arrête l'agitation et on laisse décanter les matières en suspension. La partie de la pastille restante (couche B) remonte à la surface et flotte. Elle se dissout progressivement tout en restant en surface. Elle libère ainsi le chlore actif jusqu'à sa dissolution totale après 3 heures à 23°C.

Le taux de chlore actif est mesuré dans l'eau (à mi hauteur dans le récipient contenant 10 litres d'eau) pendant la décantation en fonction du temps à 23°C. La turbidité est mesurée à l'aide d'un turbidimètre étalonné en unités FTU (équivalentes à NTU).

Les résultats sont donnés dans le Tableau I ci-dessous :

**Tableau I**

| **Temps (minutes)** | **[Cl actif] (mg/l)** | **Turbidité (FTU)** |
|---|---|---|
| 0 | 0 | 430 |
| 10 | 0,16 | 67 |
| 23 | 0,26 | 36 |
| 44 | 0,44 | 13 |
| 58 | 0,53 | 8 |
| 81 | 0,62 | 6 |
| 104 | 0,73 | 6 |
| 180 | 0,81 | 5 |
| 300 | 0,82 | 5 |

On constate que l'eau n'est plus turbide et que sa teneur en chlore actif est égale à 0,53 mg/l après 24 heures. Le pH de l'eau traitée est 6,5.

Le ratio polymère hydrosoluble cationique / polyhydroxychlorure d'aluminium (exprimé en Al₂O₃) conduisant à une bonne efficacité de la floculation/décantation dépend du type et du taux d'excipient mis en oeuvre pour la désinfection. Ce ratio optimum doit être au moins égal à 2 ppm / 20 ppm lorsque l'excipient soluble de la couche B de la pastille (comme la gomme acacia par exemple) est d'environ 0,5 g et au moins égal à 2 ppm / 30 ppm pour une masse d'excipient d'environ 1 g.

### EXEMPLE 2 (selon l'invention):

Cet exemple illustre l'invention dans le cas où l'excipient est un composé insoluble hydrophile gonflant dans l'eau.

On dispose de 10 litres d'eau turbide de même composition que dans l'Exemple 1.

En vue de traiter ce volume de 10 litres d'eau turbide, on prépare une pastille bicouche de 1,421g, la première couche (couche A) pesant 0,921 g et la deuxième couche (couche B) pesant 0,500 g. Le diamètre et l'épaisseur de la pastille sont respectivement de 20 mm et de 1,9 mm. La pastille est préparée par compression directe. La composition des couches et le taux de chaque ingrédient résultant dans le volume d'eau à traiter sont donnés ci-après:

| **Composition couche A** | mg dans la couche A | mg/l eau à traiter |
|---|---|---|
| Bicarbonate de sodium | 193,2 | 19,3 |
| Acide citrique | 82,8 | 8,3 |
| PAC^{®} 32 | 625,0 | 20* |
| PolyDADMAC^{®} DB45SH | 20,0 | 2 |

| | | |
|---|---|---|
| *exprimé en Al₂O₃ | | |

| **Composition couche B** | mg dans la couche B | mg/l eau à traiter |
|---|---|---|
| Lycatab^{®} PGS | 462,2 | 46,2 |
| DCCNa, 2H₂O | 37,8 | 3,8 |

La densité de la couche B est 0,79 pour une pression de compaction de 62 MPa appliquée sur la pastille. Sa porosité est de 51 %.

La pastille bicouche est introduite dans l'eau, sous agitation mécanique pendant deux minutes. La pastille tombe au fond du récipient et la couche A de la pastille se désagrège par effervescence en vingt secondes environ. On arrête l'agitation et on laisse décanter les matières en suspension. La partie de la pastille restante (couche B) remonte à la surface et flotte.

Le taux de chlore actif est mesuré dans l'eau (à mi hauteur dans le récipient contenant 10 litres d'eau) pendant la décantation en fonction du temps à 23°C. La turbidité est mesurée selon la même méthode qu'à l'Exemple 1. Les résultats sont donnés dans le Tableau II ci-dessous :

**Tableau II :**

| **Temps (minutes)** | **[Cl actif] (mg/l)** | **Turbidité (FTU)** |
|---|---|---|
| 0 | 0 | 370 |
| 20 | 0,18 | 79 |
| 35 | 0,30 | 23 |
| 50 | 0,35 | 10 |
| 95 | 0,53 | 6 |
| 120 | 0,57 | 5 |
| 165 | 0,66 | 4 |

Le pH de l'eau traitée est 6,5. Le taux de chlore actif résiduel dans l'eau traitée est égal à 0,51 mg/l après 24 heures. La couche B de la pastille flotte encore et peut être éliminée.

Le suivi de la consommation de chlore actif introduit dans de l'eau propre, exposée à l'air ambiant, indique une perte d'environ 0,03 mg/heure, soit 0,7 mg/24 heures. Cela indique que l'eau ainsi traitée peut être conservée entre 1 et 3 jours sans précautions particulières suivant son taux de pollution organique initiale.

### EXEMPLE 3 (selon l'invention):

On opère identiquement à l'Exemple 1 mais l'acide citrique est remplacé par l'acide malonique au taux de 59,3 mg dans la couche A. Les autres ingrédients ainsi que leurs taux respectifs sont inchangés. Le poids total de la couche A est égal à 0,960 g. La composition de la couche B est inchangée.

La turbidité de l'eau traitée évolue comme dans l'Exemple 1. Elle atteint la valeur de 7 FTU après une heure de décantation, mesurée dans les mêmes conditions que celles de l'Exemple 1.

### EXEMPLE 4 (selon l'invention):

On opère identiquement à l'Exemple 2 mais l'acide citrique est remplacé par l'ARBOCEL^{®} A300 au taux de 355 mg dans la couche A Le bicarbonate de sodium est supprimé. Les autres ingrédients ainsi que leurs taux respectifs sont inchangés. Le poids total de la couche A est égal à 1,000g. La composition de la couche B est inchangée.

Après une heure de décantation la turbidité de l'eau traitée est 8 FTU mesurée dans les mêmes conditions que celles de l'Exemple 1.

### EXEMPLE 5 (comparatif) ;

On dispose de 5 litres d'eau turbide de même composition que celle de l'Exemple 1.

On introduit simultanément dans ce volume d'eau, sous agitation mécanique, les ingrédients suivants sous forme de poudres:
- 19,1 mg de (DCCNa, 2H₂O), soit une concentration de 3,3 mg/l de DCCNa
- 156,6 mg de PAC32^{®}, soit une concentration de 10 mg/l exprimée en Al₂O₃.
- 5,3 mg de PolyDADMAC^{®} 45DBSH, soit une concentration de 1mg/l.

Le Tableau III indique la teneur en chlore actif mesurée en fonction du temps de conservation à 23°C.

On constate que le taux de chlore actif diminue très rapidement et devient inférieur à la norme de l'OMS (Organisation Mondiale de la Santé) fixant la teneur minimale (0,50 mg/l) à maintenir dans l'eau traitée pour éviter sa recontamination, après une exposition de 4 heures seulement.

**Tableau III :**

| **Temps (minutes)** | **[CI actif] (mg/l)** |
|---|---|
| 0 | 2,12 |
| 12 | 1,31 |
| 22 | 1,15 |
| 35 | 1,06 |
| 75 | 0,96 |
| 135 | 0,59 |
| 300 | 0,40 |

Cela indique que le chlore actif est rapidement consommé par la matière organique en suspension dans l'eau.

La libération simultanée du chlore actif, du floculant et du coagulant dans l'eau à traiter ne permet pas d'assurer un traitement désinfectant certain. En effet, selon l'OMS, il est nécessaire de maintenir dans l'eau une concentration en chlore actif au moins égale à 0,50 mg/l pour disposer d'une eau désinfectée.

## Revendications

1. Produit solide compacté de purification d'eau comprenant au moins une première couche et au moins une deuxième couche, **caractérisé en ce que** :
- la première couche comprend au moins un système floculant et au moins un système désintégrant,
- la deuxième couche comprend au moins un désinfectant libérant du chlore actif au contact de l'eau, et au moins un excipient du désinfectant, ledit excipient libérant le désinfectant dans l'eau à un taux contrôlé tel que l'association excipient-désinfectant libère de 0,1 à 100 mg/l de chlore actif par heure, de préférence de 0,2 à 10 mg/l de chlore actif par heure, la densité de la deuxième couche étant strictement inférieure à 1 en sorte que lorsque la premiére couche est totalement désagrégée, la deuxième couche remonte et flotte.

2. Produit selon la revendication 1, **caractérisé en ce que** la densité de la deuxième couche va de 0,70 à 0,95.

3. Produit selon l'une quelconque des revendications précédentes, **caractérisé en ce que** le système floculant comprend au moins un sel de métal trivalent et au moins un polymère cationique hydrosoluble.

4. Produit selon la revendication précédente, **caractérisé en ce que** le sel de métal trivalent est choisi parmi le sulfate de fer, le sulfate d'aluminium, le polyhydroxychlorure d'aluminium et leurs mélanges.

5. Produit selon la revendication 3 ou 4, **caractérisé en ce que** le polymère cationique hydrosoluble est un polymère cationique hydrosoluble de diallyldiméthylammonium chlorure.

6. Produit selon l'une quelconque des revendications précédentes, **caractérisé en ce que** le système désintégrant comprend au moins un agent désintégrant choisi parmi la cellulose et ses dérivés, les associations effervescentes d'un polyacide organique hydrosoluble et d'une base faible, et leurs mélanges.

7. Produit selon la revendication précédente, **caractérisé en ce que** l'agent désintégrant est une cellulose, par exemple amorphe ou cristalline.

8. Produit selon la revendication 6, **caractérisé en ce que** l'agent désintégrant est une association effervescente d'un polyacide organique hydrosoluble et d'une base faible.

9. Produit selon la revendication précédente, **caractérisé en ce que** le polyacide organique hydrosoluble est choisi parmi l'acide citrique, l'acide malique, l'acide tartrique, l'acide malonique, l'acide fumarique, l'acide maléique, l'acide succinique et leurs mélanges.

10. Produit selon la revendication 8 ou 9, **caractérisé en ce que** la base faible est le bicarbonate de sodium.

11. Produit selon l'une quelconque des revendications 6 à 10, **caractérisé en ce que** l'agent désintégrant est présent dans la première couche à une teneur inférieure ou égale à 50% en poids, de préférence à une teneur allant de 20% à 40%, en poids, par rapport au poids de la première couche.

12. Produit selon l'une quelconque des revendications précédentes, **caractérisé en ce que** le désinfectant est choisi parmi le sel de sodium de N-chloro-4-méthylbenzène sulfonamide sous forme anhydre ou dihydratée, le sel de sodium de 1,3-dichloro-s-triazine-2,4,6 trione sous forme anhydre ou dihydratée, et leurs mélanges.

13. Produit selon la revendication précédente, **caractérisé en ce que** le désinfectant est le sel de sodium de 1,3-dichloro-s-triazine-2,4,6 trione sous forme dihydratée.

14. Produit selon l'une quelconque des revendications précédentes, **caractérisé en ce que** l'excipient est choisi parmi les composés hydrosolubles à dissolution lente.

15. Produit selon la revendication précédente, **caractérisé en ce que** l'excipient est choisi parmi la gomme arabique ou acacia, la gomme adragante, la gomme de caroubier, la gomme xanthane, la gomme guar, et leurs mélanges.

16. Produit selon l'une quelconque des revendications 1 à 13, **caractérisé en ce que** l'excipient est choisi parmi les composés insolubles hydrophiles gonflant dans l'eau.

17. Produit selon la revendication précédente, **caractérisé en ce que** l'excipient est choisi parmi les amidons modifiés, les amidons gélatinisés, la fécule de pomme de terre, et leurs mélanges.

18. Produit selon l'une quelconque des revendications précédentes, **caractérisé en ce que** tous les composés constituant le produit sont de qualité alimentaire.

19. Procédé de préparation d'un produit solide compacté de purification d'eau selon la revendication 1 comprenant au moins une première couche et au moins une deuxième couche, **caractérisé en ce qu'**il comprend les étapes suivantes :
- a°) on prépare un premier mélange d'au moins un système floculant et d'au moins un système désintégrant, sous forme de poudre,
- b°) on prépare un deuxième mélange d'au moins un désinfectant libérant du chlore actif au contact de l'eau, et d'au moins un excipient du désinfectant, ledit excipient libérant le désinfectant dans l'eau à un taux contrôlé tel que l'association excipient-désinfectant libère de 0,1 à 100 mg/l de chlore actif par heure, sous forme de poudre,
- c°) on précompacte le mélange obtenu en b°) dans une pastilleuse,
- d°) on rajoute dans la pastilleuse le mélange obtenu en a°) et on compacte le tout pour obtenir un produit bicouche.

## Claims

1. A compacted solid product for the purification of water comprising at least one first layer and at least one second layer, **characterized in that**:
- the first layer comprises at least one flocculating system and at least one disintegrating system,
- the second layer comprises at least one disinfectant which releases active chlorine on contact with water and at least one excipient for the disinfectant, said excipient releasing the disinfectant into the water at a controlled rate such that the excipient-disinfectant combination releases from 0.1 to 100 mg/l of active chlorine per hour, preferably from 0.2 to 10 mg/l of active chlorine per hour, the density of the second layer being strictly less than 1, so that when the first layer has completely broken up, the second layer rises again and floats.

2. The product as claimed in claim 1, **characterized in that** the density of the second layer ranges from 0.70 to 0.95.

3. The product as claimed in either one of the preceding claims, **characterized in that** the flocculating system comprises at least one trivalent metal salt and at least one water-soluble cationic polymer.

4. The product as claimed in the preceding claim, **characterized in that** the trivalent metal salt is chosen from iron sulfate, aluminum sulfate, polyaluminum hydroxychloride and their mixtures.

5. The product as claimed in claim 3 or 4, **characterized in that** the water-soluble cationic polymer is a diallyldimethylammonium chloride water-soluble cationic polymer.

6. The product as claimed in any one of the preceding claims, **characterized in that** the disintegrating system comprises at least one disintegrating agent chosen from cellulose and its derivatives, the effervescent combinations of a water-soluble polyorganic acid and of a weak base, and their mixtures.

7. The product as claimed in the preceding claim, **characterized in that** the disintegrating agent is a cellulose, for example an amorphous or crystalline cellulose.

8. The product as claimed in claim 6, **characterized in that** the disintegrating agent is an effervescent combination of a water-soluble polyorganic acid and of a weak base.

9. The product as claimed in the preceding claim, **characterized in that** the water-soluble polyorganic acid is chosen from citric acid, malic acid, tartaric acid, malonic acid, fumaric acid, maleic acid, succinic acid and their mixtures.

10. The product as claimed in claim 8 or 9, **characterized in that** the weak base is sodium bicarbonate.

11. The product as claimed in any one of claims 6 to 10, **characterized in that** the disintegrating agent is present in the first layer at a content of less than or equal to 50% by weight, preferably at a content ranging from 20% to 40% by weight, with respect to the weight of the first layer.

12. The product as claimed in any one of the preceding claims, **characterized in that** the disinfectant is chosen form the sodium salt of N-chloro-4-methylbenzenesulfonamide in the anhydrous or dihydrate form, the sodium salt of 1,3-dichloro-s-triazine-2,4,6-trione in the anhydrous or dihydrate form, and their mixtures.

13. The product as claimed in the preceding claim, **characterized in that** the disinfectant is the sodium salt of 1,3-dichloro-s-triazine-2,4,6-trione in the dihydrate form.

14. The product as claimed in any one of the preceding claims, **characterized in that** the excipient is chosen from water-soluble compounds which dissolve slowly.

15. The product as claimed in the preceding claim, **characterized in that** the excipient is chosen from gum arabic or acacia, gum tragacanth, locust bean gum, xanthan gum, guar gum and their mixtures.

16. The product as claimed in any one of claims 1 to 13, **characterized in that** the excipient is chosen from hydrophilic insoluble compounds which swell in water.

17. The product as claimed in the preceding claim, **characterized in that** the excipient is chosen from modified starches, gelatinized starches, potato starch and their mixtures.

18. The product as claimed in any one of the preceding claims, **characterized in that** all the compounds constituting the product are of food grade.

19. A process for the preparation of a compacted solid product for the purification of water according to claim 1, comprising at least one first layer and at least one second layer, **characterized in that** it comprises the following stages:
- a) a first mixture of at least one flocculating system and of at least one disintegrating system is prepared in the powder form,
- b) a second mixture of at least one disinfectant which releases active chlorine on contact with water and of at least one excipient for the disinfectant, said excipient releasing the disinfectant into the water at a controlled rate such that the excipient-disinfectant combination releases from 0.1 to 100 mg/l of active chlorine per hour, is prepared in the powder form,
- c) the mixture obtained in b) is precompacted in a pelleting machine,
- d) the mixture obtained in a) is added to the pelleting machine and the combined mixture is compacted in order to obtain a two-layer product.

## Patentansprüche

1. Verdichtetes festes Wasserreinigungsprodukt, das zumindest eine erste Schicht und zumindest eine zweite Schicht aufweist, **dadurch gekennzeichnet, dass** - die erste Schicht zumindest ein Ausflockungssystem und zumindest ein Spaltsystem aufweist, und
- die zweite Schicht zumindest ein Desinfektionsmittel, das bei Kontakt mit Wasser aktives Chlor freisetzt, und zumindest einen Träger für das Desinfektionsmittel aufweist, wobei der Träger das Desinfektionsmittel im Wasser in einer kontrollierten Rate freisetzt, so dass die Träger-Desinfektionsmitteleinheit 0,1 bis 100 mg/l aktives Chlor pro Stunde, vorzugsweise 0,2 bis 10 mg/l aktives Chlor pro Stunde, freisetzt, und die Dichte der zweiten Schicht stets kleiner als 1 ist, so dass die zweite Schicht aufsteigt und schwimmt, wenn die erste Schicht komplett zersetzt ist.

2. Produkt nach Anspruch 1, **dadurch gekennzeichnet, dass** die Dichte der zweiten Schicht im Bereich von 0,70 bis 0,95 liegt.

3. Produkt nach einem der vorhergehenden Ansprüche, **dadurch gekennzeichnet, dass** das Ausflockungssystem zumindest ein Salz eines dreiwertigen Metalls und zumindest ein kationisches wasserlösliches Polymer aufweist.

4. Produkt nach dem vorhergehenden Anspruch, **dadurch gekennzeichnet, dass** das Salz des dreiwertigen Metalls ausgewählt ist aus der Gruppe bestehend aus Eisensulfat, Aluminiumsulfat, Polyhydroxyaluminiumchlorid und deren Mischungen.

5. Produkt nach Anspruch 3 oder 4, **dadurch gekennzeichnet, dass** das wasserlösliche kationische Polymer ein wasserlösliches kationisches Polymer aus Diallyldimethylammoniumchlorid ist.

6. Produkt nach einem der vorhergehenden Ansprüche, **dadurch gekennzeichnet, dass** das Spaltsystem zumindest einen spaltenden Wirkstoff aufweist, der ausgewählt ist aus der Gruppe bestehend aus Cellulose und ihren Derivaten, sprudelnden Verbindungen einer organischen wasserlöslichen Polysäure mit einer schwachen Base und deren Mischungen.

7. Produkt nach dem vorhergehenden Anspruch, **dadurch gekennzeichnet, dass** der spaltende Wirkstoff eine Cellulose, z.B. amorphe oder kristalline, ist.

8. Produkt nach Anspruch 6, **dadurch gekennzeichnet, dass** der spaltende Wirkstoff eine sprudelnde Verbindung aus einer organischen wasserlöslichen Polysäure und einer schwachen Base ist.

9. Produkt nach dem vorhergehenden Anspruch, **dadurch gekennzeichnet, dass** die organische wasserlösliche Polysäure ausgewählt ist aus der Gruppe bestehend aus Citronensäure, Äpfelsäure, Weinsäure, Malonsäure, Fumarsäure, Maleinsäure, Bernsteinsäure und deren Mischungen.

10. Produkt nach Anspruch 8 oder 9, **dadurch gekennzeichnet, dass** die schwache Base Natriumbicarbonat ist.

11. Produkt nach einem der Ansprüche 6 bis 10, **dadurch gekennzeichnet, dass** der spaltende Wirkstoff in der ersten Schicht in einer Menge von kleiner oder gleich 50 Gew.-%, bevorzugt in einer Menge von 20 bis 40 Gew.-%, in Bezug auf das Gewicht der ersten Schicht enthalten ist.

12. Produkt nach einem der vorhergehenden Ansprüche, **dadurch gekennzeichnet, dass** das Desinfektionsmittel ausgewählt ist aus der Gruppe bestehend aus dem Natriumsalz von N-Chlor-4-methylbenzolsulfonamid in Form des Anhydrids oder des Dihydrats, dem Natriumsalz von 1,3-Dichlor-s-triazin-2,4,6-trion in Form des Anhydrids oder des Dihydrats und deren Mischungen.

13. Produkt nach dem vorhergehenden Anspruch, **dadurch gekennzeichnet, dass** das Desinfektionsmittel ein Natriumsalz von 1,3-Dichlor-s-triazin-2,4,6-trion in Form des Dihydrats ist.

14. Produkt nach einem der vorhergehenden Ansprüche, **dadurch gekennzeichnet, dass** der Träger ausgewählt ist aus der Gruppe bestehend aus den wasserlöslichen Verbindungen, die eine langsame Lösung aufweisen.

15. Produkt nach dem vorhergehenden Anspruch, **dadurch gekennzeichnet, dass** der Träger ausgewählt ist aus der Gruppe bestehend aus Gummi arabicum oder Akaziengummi, Traganth, Carubin, Xanthangummi, Guarkemmehl und deren Mischungen.

16. Produkt nach einem der Ansprüche 1 bis 13, **dadurch gekennzeichnet, dass** der Träger ausgewählt ist aus der Gruppe bestehend aus den unlöslichen hydrophilen Verbindungen, die im Wasser aufquellen.

17. Produkt nach dem vorhergehenden Anspruch, **dadurch gekennzeichnet, dass** der Träger ausgewählt ist aus der Gruppe bestehend aus den modifizierten Stärken, den gelatinierten Stärken, Kartoffelstärke und deren Mischungen.

18. Produkt nach einem der vorhergehenden Ansprüche, **dadurch gekennzeichnet, dass** alle das Produkt bildenden Verbindungen Lebensmittelqualität aufweisen.

19. Verfahren zur Herstellung eines verdichteten festen Wasserreinigungsprodukts nach Anspruch 1, das zumindest eine erste Schicht und zumindest eine zweite Schicht aufweist, **dadurch gekennzeichnet, dass** es folgende Schritte aufweist:
- a°) Herstellen einer ersten Mischung in Form eines Pulvers aus zumindest einem Ausflockungssystem und zumindest einem Spaltsystem,
- b°) Herstellen einer zweiten Mischung in Form eines Pulvers mit zumindest einem Desinfektionsmittel, das aktives Chlor bei Kontakt mit Wasser freisetzt, und zumindest einem Träger für das Desinfektionsmittel, wobei der Träger das Desinfektionsmittel im Wasser in einer kontrollierten Rate freisetzt, so dass die Träger-Desinfektionsmitteleinheit 0,1 bis 100 mg/l aktives Chlor pro Stunde freisetzt,
- c°) Vorpressen der erhaltenen Mischung aus b°) in eine Tablettenform,
- d°) Hinzufügen der erhaltenen Mischung aus a°) zu der Tablettenform und Pressen des Ganzen, um ein doppelschichtiges Produkt zu erhalten.
